# DEMANDE DE BREVET EUROPEEN

(11) **EP 2 856 856 A1**
(43) Date de publication de la demande: **08.04.2015**
(21) Numéro de dépôt: 14306348.5
(22) Date de dépôt: 02.09.2014
(51) Int. Cl.: A01F 15/00, A01D 84/00

(54) **Dispositif combiné d'andainage et de pressage en balles, notamment pour le foin**

(30) Priorité: 03.09.2013 FR 1358397
(71) Demandeur: KAMF, 87230 Flavignac (FR)
(72) Inventeur: Roux, Jean-Michel, 87000 LIMOGES (FR)
(74) Mandataire: Fantin, Laurent

(57) **Abrégé**

L'objet de l'invention est un dispositif combiné pour l'andainage et pour la mise en balles par pressage, notamment du foin, destiné à être relié à un engin tracteur muni d'un attelage trois points et d'une prise de force, caractérisé en ce qu'il comprend des moyens (10) d'attelage, un châssis (12) unique sur roues (54-1, 54-2) comprenant des moyens (14) d'andainage et des moyens (16) de réception et de support d'une presse (18) à balles.

Le dispositif comprend également une seconde variante.

## Description

La présente invention vise un dispositif combiné pour l'andainage et pour la mise en balles par pressage notamment du foin, dans un propriété agricole.

Les opérateurs agricoles, propriétaires ou entrepreneurs, sont amenés à diminuer le personnel pour des raisons évidentes de coût, de recrutement, de souplesse du travail.

La mécanisation a permis de limiter les interventions et les progrès ont conduit à des gains de temps de travail avec les différents outils si bien que la marge de gain de temps sur une opération reste encore possible mais en proportion, cette marge de gain ne peut être que modeste.

De plus pour des considérations liées à la qualité des produits recherchés, il faut pouvoir être extrêmement réactif. Si le personnel est limité en nombre, on ne peut donc recourir à une armada d'opérateurs pour intervenir.

L'entraide reste difficile car tous les opérateurs agricoles d'un même secteur souhaitent intervenir de la même façon sur les mêmes cultures et donc généralement au même moment. Une intervention à plusieurs machines et donc plusieurs opérateurs simultanément pour profiter d'un créneau météo est totalement à exclure ou possible dans un nombre infime de cas.

Les opérateurs ont investi en matériel comme indiqué ci-avant, il est certain, mais ces investissements sont lourds et il convient de les amortir. Proposer de nouveaux matériels est une solution mais encore faut-il avoir amorti les précédents ou avoir les moyens d'investir totalement dans un nouveau matériel et mettre en sous-utilisation ou au rebut les matériels du parc existant.

Une solution pour gagner en efficacité, en rendement, en coût, en personnel, en qualité, est de combiner les opérations c'est-à-dire à réaliser des opérations en temps masqué.

C'est ce que se propose de faire le dispositif de la présente invention, les deux opérations concernées étant l'andainage et la mise en balle du foin, de paille, par exemple.

Pour la suite de la description, on retient comme exemple la réalisation de balles de foin.

Lorsque l'opérateur agricole souhaite préparer du foin en vue de sa conservation pour nourrir le bétail en hiver ou en vue de sa commercialisation, il existe plusieurs opérations successives.

La première est la coupe de l'herbe sur pied, à savoir le fauchage.

L'herbe ainsi fauchée est séchée à l'air libre, sur le sol, et pour faciliter ce séchage et afin de sécher la matière dans son ensemble, l'herbe est régulièrement retournée, cette herbe séchée prenant le nom de foin.

L'ennemi de la conservation du foin est l'humidité.

Aussi, lorsque le foin est sec, il est bon de le stocker. Afin de limiter les volumes, le foin est comprimé sous forme de balles ce qui permet aussi le stockage sous forme fractionnée et qui facilite également la manutention.

Ces balles peuvent être de forme parallélépipédique ou ronde, en l'occurrence, le mode de réalisation qui sera concerné par la présente invention vise une presse à balles, notamment de balles rondes, c'est-à-dire de forme géométrique cylindriques, obtenues par enroulement.

Préalablement à cette opération de mise en balle, le foin étant éparpillé sur le sol, il faut le regrouper pour former des colonnes de foin dites andains, à l'aide d'un dispositif justement dénommé andaineur, ce qui permet d'alimenter la presse lors de son passage.

L'étape de fauchage constitue la première opération et elle ne peut être réalisée que seule.

La ou les étapes suivantes de retournement sont nécessaires et là encore elles ne peuvent être effectuées que de façon isolée, généralement en fonction des conditions météo et il n'est pas possible de combiner cette étape de retournement ou ces étapes de retournement avec une autre intervention.

Par contre, une fois sec, les opérations d'andainage et de pressage pour mise en balles peuvent être combinées.

C'est là l'objet de la présente invention.

Il existe un dispositif objet de la demande de brevet français N° 2 769 462 qui décrit une machine pour récolter des produits agricoles du type fourrage.

Cet agencement comprend successivement des moyens d'andainage, un ramasseur et une presse à balles, roulante.

Ainsi, cet agencement doit être adapté à la presse à balles concernée dans le cas de l'attelage à châssis unique. La variante décrite qui concerne la double articulation est à exclure pour des raisons législatives.

On constate dès lors que le ramasseur, qui est généralement intégré à la presse, est prévu de façon indépendante dans cet art antérieur, ce qui complique fortement l'agencement.

Il s'agit donc d'une machine à part entière nécessitant un achat de la machine complète.

Les avantages qui vont découler de la description qui va suivre d'un mode particulier de réalisation de la présente invention sont nombreux.

Tout d'abord, il s'agit bien de la réalisation de deux opérations en un seul passage sur la surface agricole concernée.

Ensuite, le dispositif est parfaitement adapté car il permet d'utiliser différents types de presses à balles et donc de changer de presse, ce qui est particulièrement avantageux pour les entrepreneurs qui peuvent utiliser chez chaque exploitant la presse dont il dispose qui délivre des balles comme le souhaite l'exploitant avec la qualité attendue.

Pour le propriétaire, l'avantage est aussi de pouvoir utiliser la presse dont il dispose déjà. C'est en effet un investissement lourd qui peut donc continuer à être amorti.

Si le propriétaire du dispositif selon la présente invention souhaite changer de presse, il peut le faire sans aucun problème et utiliser la nouvelle presse en lieu et place de la précédente.

Si le propriétaire voit sa presse tomber en panne, il peut louer une autre presse par exemple et poursuivre son travail de mise en balles.

On note aussi que le gabarit du dispositif l'autorise à rouler sur la route sans dépasser les gabarits routiers autorisés, ce qui est également un atout non négligeable surtout pour les entrepreneurs qui se déplacent sur des distances relativement longues comme cela sera expliqué plus avant.

Le dispositif peut être attelé à tout engin agricole doté d'une prise de force et d'un attelage trois points car il est prévu une platine d'interface.

On note aussi que le dispositif est rigide et ne constitue pas deux remorques attelées l'une à l'autre derrière un engin tracteur tel un convoi.

L'attelage est aisé, nécessitant pour l'opérateur de procéder aux connexions fluides hydrauliques, aux connexions électriques, aux connexions mécaniques, ceci de façon connue.

Le dispositif selon la présente invention est maintenant décrit en détail en regard des dessins annexés, sans que ce mode de réalisation soit considéré comme limitatif, dessins sur lesquels les différentes figures représentent :
- Figure 1 : une vue en perspective du dispositif selon la présente invention, opérationnel, prêt à être attelé avec la presse,
- Figure 2 : une vue en élévation latérale du dispositif de la figure 1,
- Figure 3 : une vue de dessus du dispositif de la figure 1,
- Figure 4 : une vue en perspective du dispositif selon la présente invention, opérationnel, prêt à être attelé sans la presse,
- Figure 5 : une vue de dessus du dispositif de la figure 4,
- Figure 6 : une vue en élévation latérale du dispositif de la figure 4,
- Figure 7 : une vue de détail des moyens de positionnement de la presse,
- Figure 8 : une vue de détail des moyens d'attelage,
- Figure 9 : une vue de détail des moyens de chargement de la presse,
- Figures 10 : une vue en perspective d'une variante du dispositif selon la présente invention, plus particulièrement du dispositif de chargement de et de retenue de la presse à balles en position de roulage, les moyens d'andainage ayant été retirés pour la clarté de la figure,
- Figure 11 : une vue en perspective du dispositif selon la figure 10, en position de chargement,
- Figure 12 : une vue en perspective de la variante du dispositif de la figure 10, une fois la presse à balles chargée,
- Figure 13 : une vue de dessus du dispositif complet, selon la variante de la figure 10, sans la presse en avec les moyens d'andainage en position de travail,
- Figure 14 : une vue de la presse de la figure 13 mais avec la presse à balles en place,
- Figure 15 : une vue en élévation latérale du dispositif complet selon la variante de la figure 10, en position de travail combiné.

La présente invention est maintenant décrite en détail suivant un premier mode de réalisation.

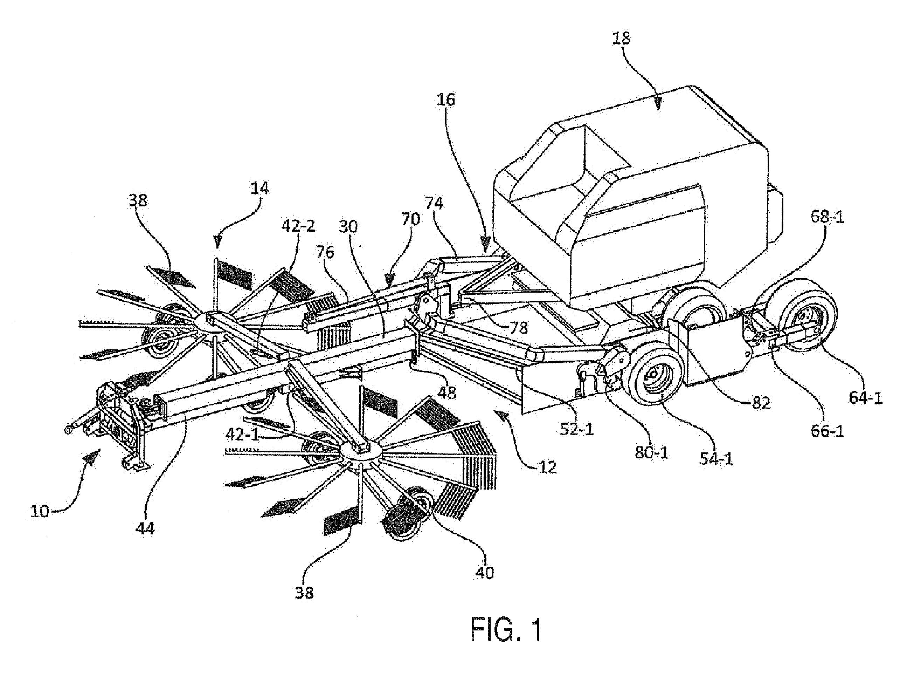

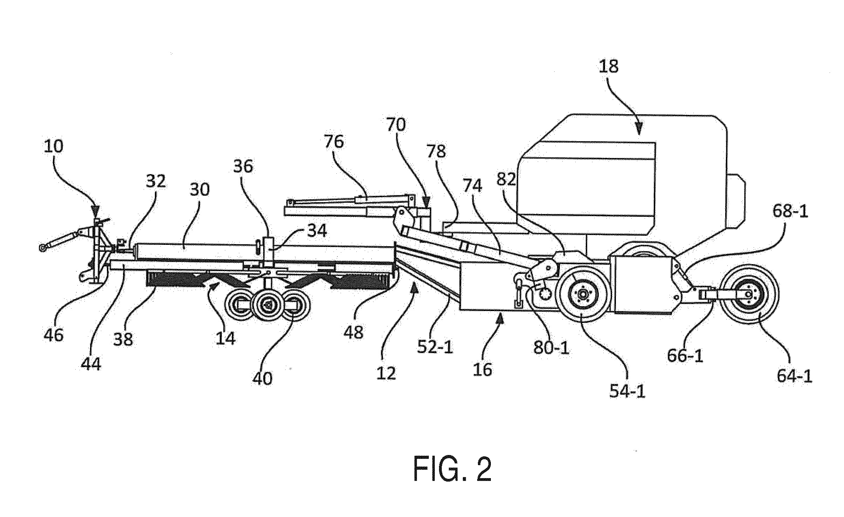

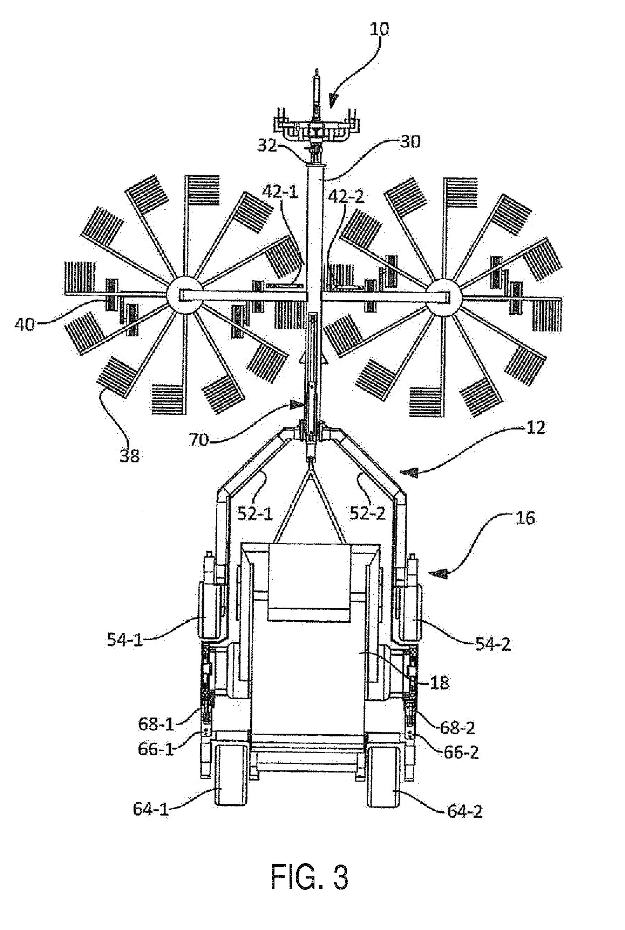

Le dispositif concerné comprend des moyens 10 d'attelage, un châssis 12 unique, des moyens 14 d'andainage et des moyens 16 de réception et de support d'une presse 18 à balles ainsi que cela est visible sur les figures 1, 2 et 3.

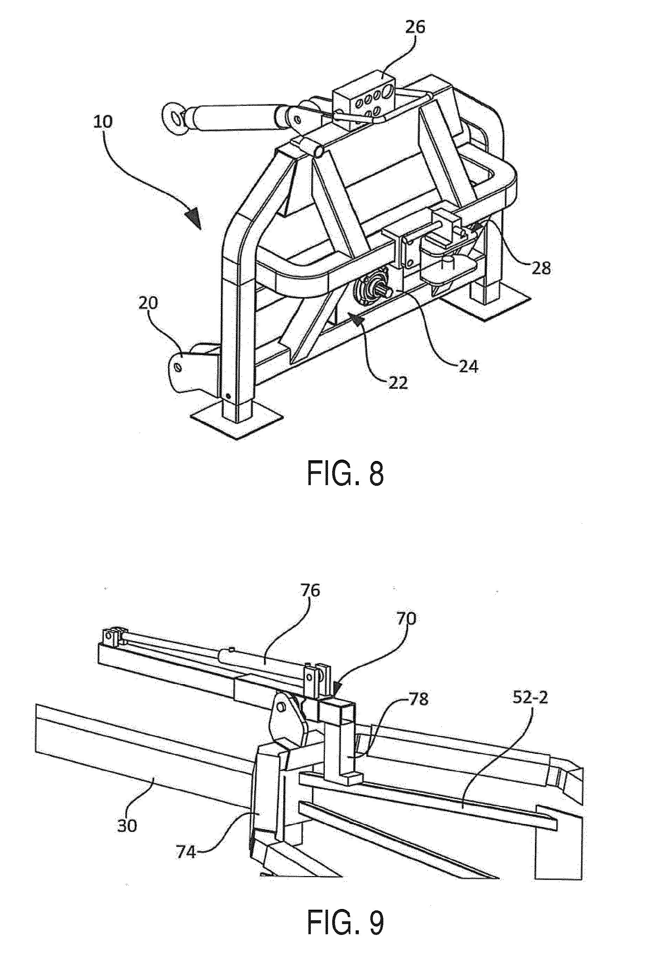

Les moyens 10 d'attelage, représentés en détail sur la figure 8, comprennent une interface 20 mécanique trois points, destinée à coopérer avec l'attelage trois points de l'engin tracteur, non représenté.

Ces moyens 10 d'attelage comprennent de plus une interface 22 moteur destinée à coopérer avec la prise de force de l'engin tracteur, non représenté, afin de fournir la puissance mécanique et la puissance hydraulique et de les transmettre aux éléments mobiles, entraînés, de l'andaineur et de la presse.

L'interface 20 mécanique peut aussi supporter des moyens 24 de pilotage des vitesses de rotation.

Sur l'interface mécanique de ces moyens 10 d'attelage, on trouve aussi des connexions fluidiques 26 de façon connue pour assurer la distribution d'énergie à travers le fluide hydraulique vers les composants nécessitant une transmission hydraulique, comme montré sur la figure 8.

Enfin, l'interface 20 mécanique comporte une platine 28 d'attelage, en l'occurrence une chape à clavette automatique, notamment pour recevoir le châssis 12 unique.

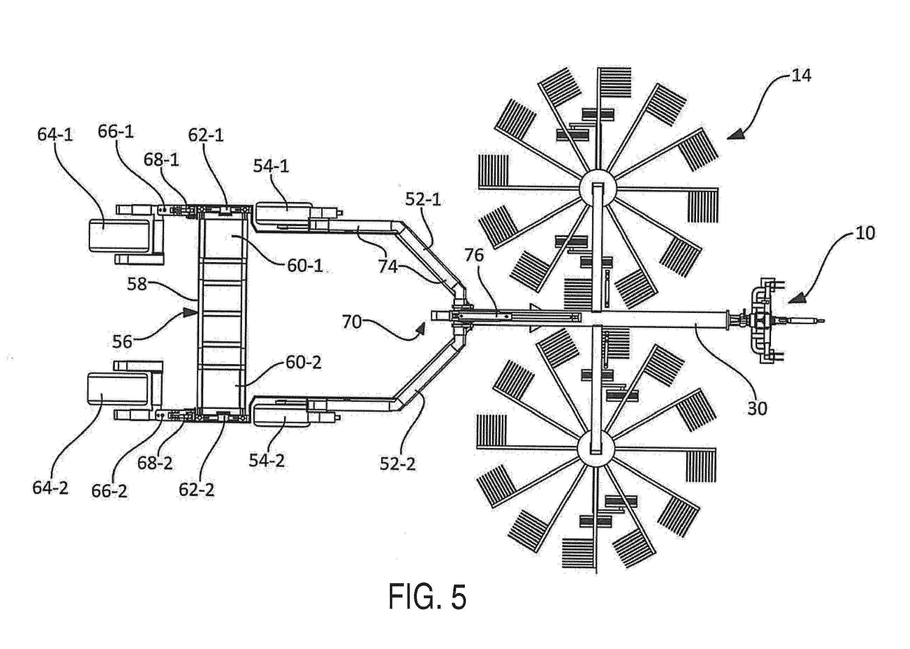

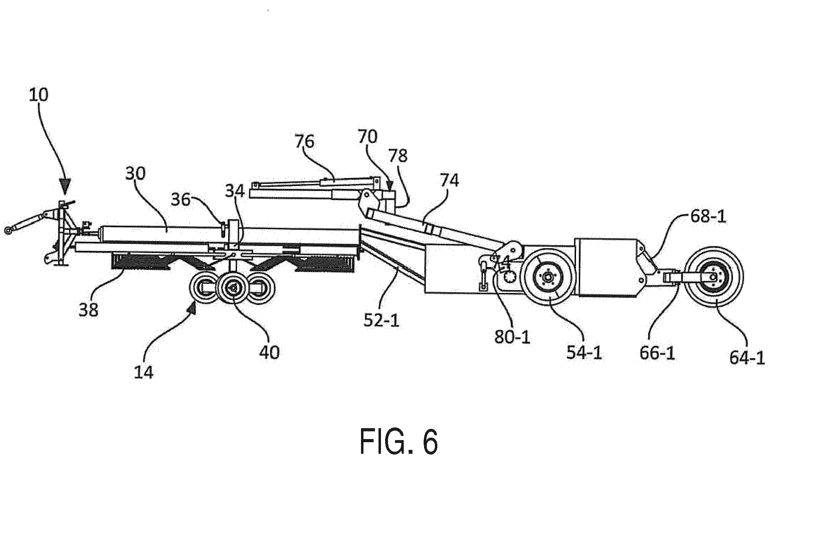

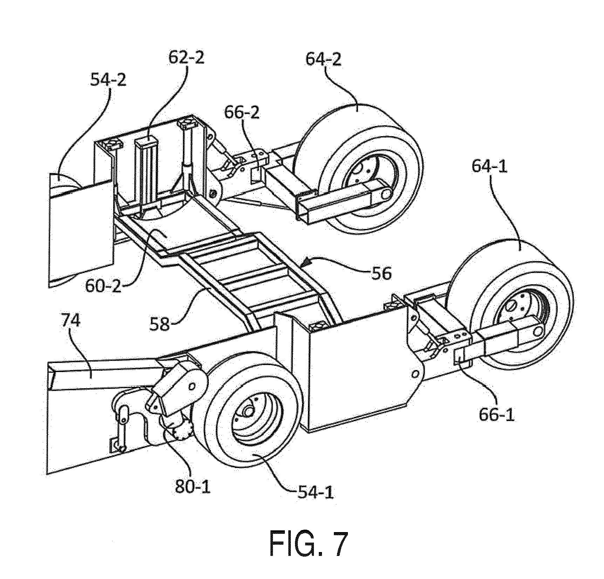

Le châssis 12 unique, voir l'ensemble des figures 1 à 9, comprend un timon 30 et les moyens 16 de réception et de support destinés à accueillir une presse 18 à balles.

Le timon 30 est équipé d'un anneau 32 destiné à coopérer avec la platine 28 d'attelage des moyens 10 d'attelage, par son extrémité amont si l'on considère le sens de déplacement de l'ensemble, vers l'avant.

L'autre extrémité du timon 30 est solidaire des moyens 16 de réception et de support destinés à accueillir une presse 18 à balles.

Le timon 30 supporte également les moyens 14 d'andainage qui se trouvent donc disposés en amont des moyens 16 de réception et de support destinés à accueillir la presse 18 à balles.

Ces moyens 14 d'andainage comportent deux bras 34-1 et 34-2 mobiles par rapport audit timon de sorte à pouvoir leur conférer deux positions l'une de transport dans laquelle les bras sont relevés verticalement suivant un mouvement de rotation vers le haut et l'autre de travail dans laquelle les bras sont sensiblement horizontaux.

Ces bras 34 sont déplacés par tout moyen adapté et dans le mode de réalisation préférentiel, connu et simple, les bras 34 sont déplacés par des vérins 36 hydrauliques.

Chaque bras 34 porte des râteaux 38 montés à rotation ainsi qu'un train 40 de roues destinées à venir en roulage au sol pour maintenir la hauteur des râteaux par rapport au sol. Ces roues formant un train de roues de jauge.

De façon à entraîner les râteaux en rotation, il est prévu une motorisation mécanique par arbre 42-1 et 42-2.

Aussi, de façon connue, un arbre 44 principal est porté par le timon 30 avec une connexion 46 amont, apte à coopérer avec l'interface 22 moteur.

Cet arbre 44 principal se prolonge jusqu'à l'arrière dudit timon 30 avec une connexion 48 aval.

De façon avantageuse et pour ajuster les vitesses de rotation, un réducteur 50 peut être interposé sur cet arbre 44 principal en direction des deux arbres 42-1 et 42-2.

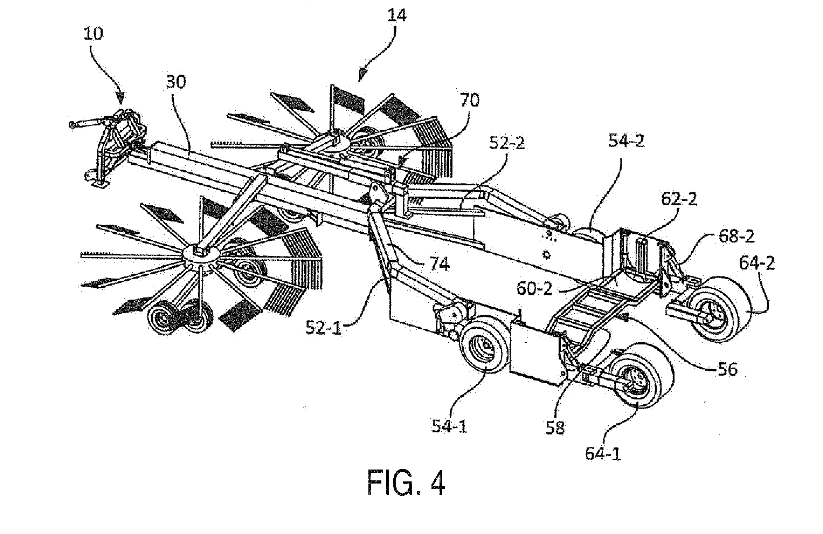

Les moyens 16 de réception et de support destinés à accueillir une presse 18 à balles sont maintenant décrits en détail en regard des figures 4, 5, 6 et 7, sur lesquelles la presse 18 à balles a été supprimée pour faciliter la lecture, en plus des figures 1, 2 et 3 sur lesquelles la presse est en place, les références étant identiques.

Le châssis 12 unique comprend donc le timon 30 qui se prolonge par les moyens 16 de réception et de support de la presse 18.

Ces moyens 16 de réception et de support comprennent deux longerons 52-1 et 52-2 portant chacun une roue 54-1 et 54-2 avec ses moyens de suspension, de roulement. Ces longerons 52 constituent sensiblement un Y avec le timon 30. L'écartement entre les branches du Y constituées des longerons est au gabarit routier.

Ces deux longerons 52 sont reliés à leurs extrémités arrière par un berceau 56, qui se trouve donc en position transversale.

Ce berceau 56 porte, de part et d'autre d'un pont 58 deux nacelles 60-1 et 60-2 destinées à recevoir les roues de la presse 18 à balles comme cela sera expliqué plus avant.

Ce berceau 56 est porté par des ascenseurs 62-1 et 62-2. Ces ascenseurs 62 sont avantageusement du type à vérin hydraulique pour l'homogénéité de l'agencement.

Ces ascenseurs 62 permettent donc de placer le berceau 56 en plusieurs positions, dont au moins une première position basse P1 de mise en place de la presse 18 à balles et une deuxième position relevée P2 de déplacement, par exemple sur route. De plus, en l'absence de presse, le berceau peut être relevé dans la deuxième position pour permettre le passage d'un andain venant d'être formé en amont par les râteaux 38.

Les moyens 16 de réception et de support de la presse 18 sont complétés par des roues 64-1 et 64-2 de jauges.

Ces roues 64 sont directionnelles autour d'un axe vertical 66-1 et 66-2 en position de travail commandées par tout moyen comme des vérins hydrauliques. Dans une configuration extrême, elles peuvent donc être pivotées vers l'extérieur lors de l'introduction de la presse 18 à balles comme cela sera expliqué plus avant. Aussi le support de roues est muni d'organes 68-1 et 68-2 de relevage et directionnels, en l'occurrence des vérins.

Ces organes de relevage permettent aussi, si nécessaire, de régler la hauteur de travail de façon à positionner le berceau 56 en hauteur par rapport au sol et donc à positionner par rapport au sol la presse 18 à balles qu'il supporte lorsqu'elle est en position de travail.

Les moyens 16 de réception et de support de la presse 18 comprennent en outre des moyens 70 de chargement et de retenue de la presse 18 à balles.

Ces moyens 70 de chargement et de retenue comportent dans le premier mode de réalisation représenté, un mât 72 de chargement monté à rotation et à translation au droit du point de jonction du timon et des longerons, sur un arceau 74.

Un organe 76 de manoeuvre, sous forme d'un vérin hydraulique, toujours dans un souci d'homogénéité, permet ces manoeuvres du mât 72 de chargement.

Ce mât 72 porte à son extrémité libre des moyens 78 de liaison amovible avec la presse 18 à balles de façon à pouvoir assurer sa traction et sa retenue sur le berceau 56.

Ce mât est monté sur un arceau 74 monté pivotant sensiblement au droit des roues 54 et manoeuvré par des organes 80-1 et 80-2 de manoeuvre, peut prendre une position aval pour accrocher la presse et peut pivoter pour prendre une position amont sous l'effet de traction de l'organe 76 de manoeuvre, du fait de la géométrie de l'arceau 74 et du mât 72.

De même, l'arbre 44 principal d'entraînement assure la transmission de puissance nécessaire pour la presse 18 à balles. Chaque presse 18 du commerce est munie de son propre arbre d'entraînement (non représenté), de façon normalisée, cet arbre étant apte à être connecté avec une prise de force d'un engin, en l'occurrence avec la connexion 48 aval dudit arbre principal qui assure le transfert de puissance.

Le dispositif combiné, ainsi qu'il vient d'être décrit, est mis en oeuvre de la façon suivante.

L'opérateur conduit le dispositif qui comprend le timon et l'andaineur qui est monté à demeure, proche de la presse à utiliser par exemple.

Les roues de jauge sont relevées et écartées afin de laisser passer le train de roues de la presse 18, le dispositif étant en appui sur ses roues 54 principales.

L'opérateur abaisse le berceau 56 au sol et relie le mât 72 par son extrémité libre aux moyens de liaison amovible de la presse 18 à balles de façon à pouvoir assurer sa traction après avoir fait pivoter l'arceau 74. Il peut adjoindre des rampes pivotantes si nécessaire, non représentées car à la portée de l'homme de l'art.

La mise en service de l'organe 76 de manoeuvre du mât 72 permet de tracter la presse et de la conduire jusqu'à ce que ses roues se logent dans les nacelles 60-1 et 60-2 prévues à cet effet, ceci en fonction des différentes longueurs de presse et de leurs propres timons.

Les roues 64 de jauge sont ramenées en position alignée avec le gabarit routier. Elles seront reposées au sol lorsque le dispositif sera en position de travail.

Les différentes connexions mécaniques sont réalisées puisque le dispositif a déjà été connecté à l'engin tracteur du fait qu'il est nécessaire de disposer de l'électricité et de la puissance hydraulique pour ces premières manoeuvres. Ainsi, les moyens 14 d'andainage peuvent être entraînés à la vitesse de rotation adaptée, pour une vitesse donnée de rotation de la prise de force de l'engin tracteur.

De même, l'arbre moteur de la presse 18 est entraîné par l'arbre 44 principal à la vitesse de rotation préconisée pour réaliser les balles, ceci pour une vitesse donnée de rotation de la prise de force de l'engin tracteur. Cette vitesse de sortie est définie pour les moyens d'andainage comme pour la presse par le constructeur.

De façon générale la vitesse en sortie de l'interface mécanique est adaptée à la presse et, compte tenu de cette vitesse , la vitesse de rotation des râteaux des moyens 14 d'andainage est adaptée, puisqu'un réducteur peut être interposé comme indiqué plus haut dans la description.

Le dispositif combiné est amené sur l'espace à travailler.

L'opérateur place le dispositif en configuration travail. A cet effet, il abaisse les bras 34 supportant les râteaux 38 et les trains 40 de roues prennent contact avec le sol.

Concernant la presse, les roues 64 de jauge sont abaissées en contact avec le sol dans le sens de déplacement. La hauteur de travail est réglée en fonction du poids et de la géométrie de la presse.

La presse 18 se retrouve dans une configuration telle que le pickup 82 est dans la configuration de travail tant en hauteur qu'en inclinaison.

Le champ à travailler est recouvert de foin sec.

Lorsque l'opérateur avance dans le champ, le dispositif tracté assure, grâce aux moyens 14 d'andainage, le regroupement du foin se trouvant sur la largeur de travail des râteaux sous forme d'un andain centré sur l'axe de déplacement du dispositif tracté.

L'andain de foin est avalé par le pickup et traité par la presse 18 à balle de façon à réaliser des balles qui sont généralement libérées dans le champ.

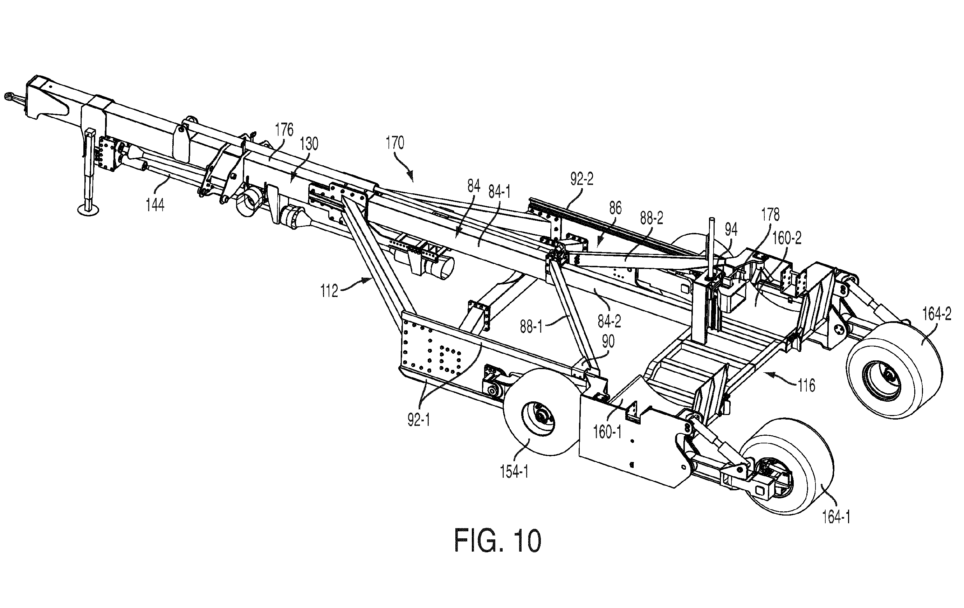

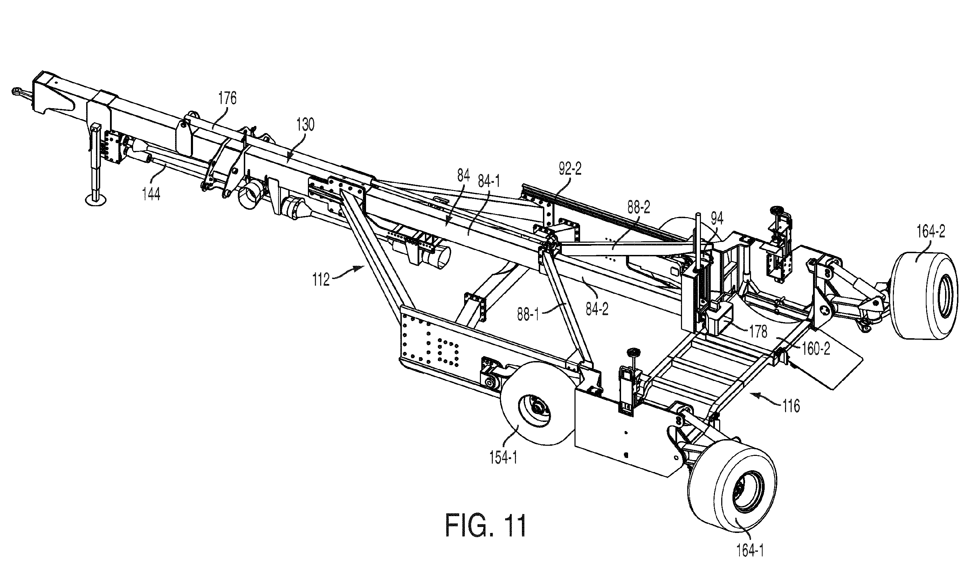

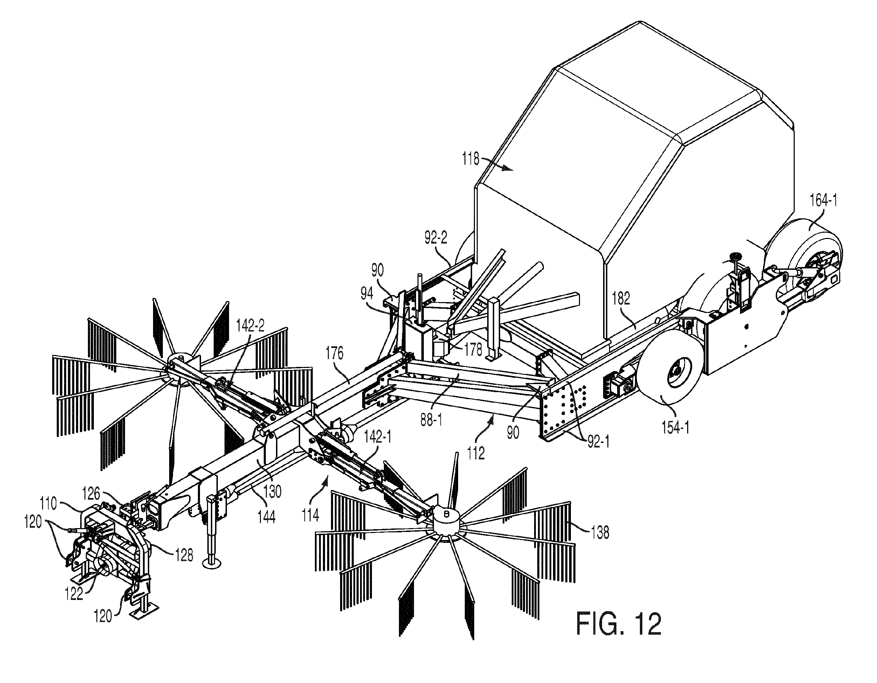

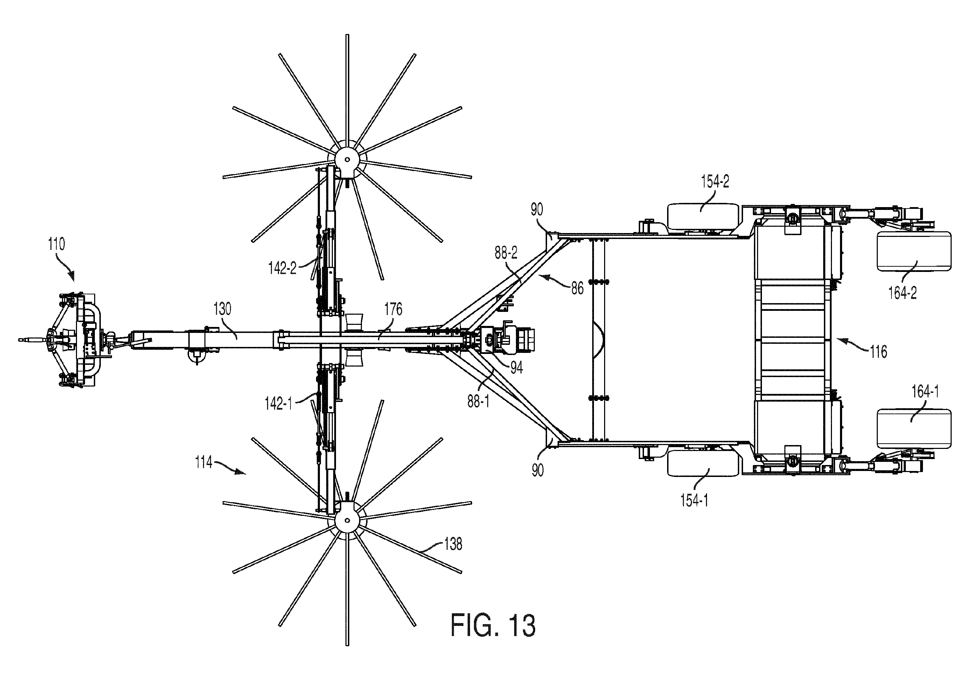

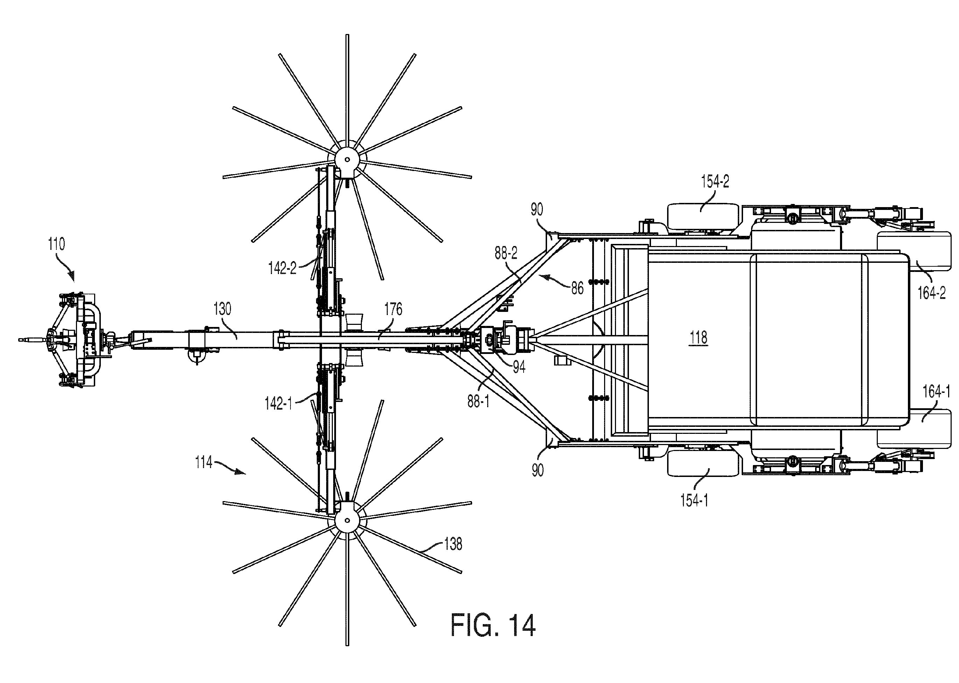

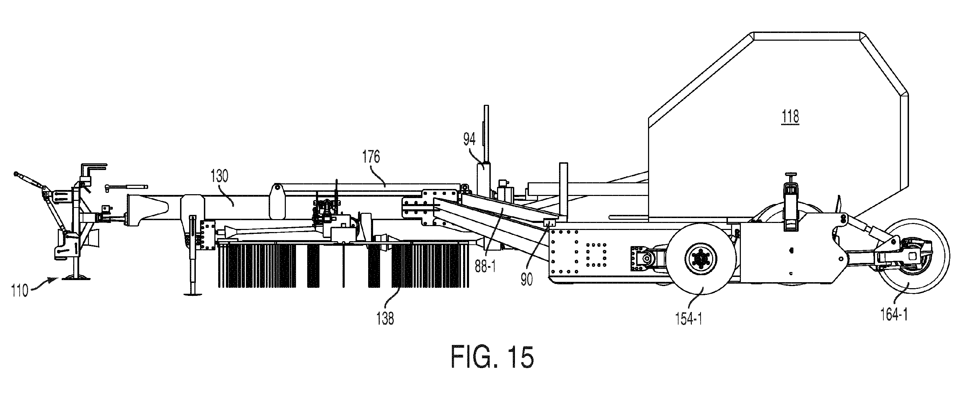

Le dispositif est maintenant décrit en regard des figures 10 à 15 selon une variante de réalisation des moyens 70 de chargement et de retenue de la presse 18 à balles.

Les références pour ce second mode de réalisation seront identiques à celles du premier mode de réalisation pour les éléments identiques, augmentées de 100. Le châssis 112 reste sensiblement identique, avec un timon 130, des moyens 116 de réception et de support destiné à accueillir une presse 118 à balles.

Les moyens 170 de chargement et de retenue de ce second mode de réalisation sont modifiés. Ces moyens 170 de chargement et de retenue comprennent un bras 84 télescopique agencé dans le timon 130 qui forme un fourreau et mus par un organe de manoeuvre 176.

Ce bras 84 télescopique est équipé de moyens 178 de liaison amovible avec la presse à balles de façon à pouvoir assurer la traction et la retenue de ladite presse 118 à balles dans les nacelles 160-1 et 160-2.

Ce bras 84 télescopique comprend deux brins 84-1 et 84-2 mobiles. L'extrémité libre du premier brin 84-1 est solidaire de moyens 86 raidisseurs. Ces moyens 86 raidisseurs comprennent deux montants 88-1 et 88-2 disposés en Vé. Une des extrémités de chacun des deux montants 88-1 et 88-2 est solidarisée à l'extrémité du premier brin et l'autre extrémité de chacun des deux montants 88-1 et 88-2 est munie de patins 90 coulissants. Ces patins 90 coulissants coopèrent chacun avec une glissière 92-1 et 92-2 respectivement, portée par le châssis 112, plus particulièrement par les flancs latéraux dudit châssis.

Ainsi, lorsque le premier brin 84-1 se déplace en translation, les deux montants 88-1 et 88-2 qui en sont solidaires, se déplacent simultanément, les patins 90 coulissant chacun par rapport aux glissières 92-1 et 92-2. Le bras 84 télescopique est ainsi guidé latéralement et soutenu en hauteur.

Le brin 84-2 est muni de moyens 178 de liaison amovible avec la presse à balles de façon à pouvoir assurer la traction et la retenue de ladite presse 118 à balles dans les nacelles 160-1 et 160-2 et comporte aussi des moyens 94 de réglage en hauteur de ces moyens 178 de liaison. De tels moyens 94 de réglage peuvent prendre la forme d'un vérin hydraulique agencé verticalement, donc perpendiculairement au brin 84-2 qui le supporte.

Il est ainsi possible de régler, une fois chargée la presse 118 à balles, l'inclinaison du timon de la presse à balles, ce qui augmente ou diminue la hauteur du pickup up 182 par rapport au sol notamment.

De plus ce réglage supplémentaire permet une meilleure adaptation aux différents modèles de presses à balles et un ajustement en fonction du travail. On constate donc que les problèmes soulevés par la présente invention sont résolus, le premier étant d'andainer simultanément à la mise en balles.

De plus, le dispositif selon l'invention, selon l'un ou l'autre des modes de réalisation permet d'utiliser toute presse à balles à tout moment.

On note que le problème du double attelage qui contrevient à la règlementation, a disparu et que le gabarit routier est néanmoins respecté.

La presse à balles utilisée ne requiert aucune modification ou adaptation pour être adaptée au dispositif selon la présente invention.

Les vitesses de travail de chacun des moyens d'andainage et de pressage sont respectées, car les vitesses peuvent être différentes, ceci à partir d'une même source de puissance, celle de la prise de force de l'engin tracteur.

Le dispositif est très modulable car il peut permettre une utilisation de l'andaineur sans presse si nécessaire.

L'interface est également prévue pour recevoir d'autres engins ayant un système d'attelage classique et non un attelage trois points. Il suffit alors de laisser cette interface attelée et de décrocher le dispositif selon la présente invention.

Le dispositif selon l'invention peut ainsi assurer quatre types de travaux différents pour un même propriétaire :
- Andainer
- Utiliser sa presse à balles
- Utiliser une autre presse
- Andainer et presser en même temps.

De plus, pour un entrepreneur, le dispositif lui permet de se rendre chez un client agriculteur et utiliser la presse dudit agriculteur client de façon à générer des balles telles que souhaitées par le client et fabriquées par sa presse à balles. Si la presse de l'agriculteur est en panne, l'entrepreneur peut recourir à une autre des presses dudit agriculteur, il peut emprunter celle d'un voisin, ou il peut encore louer une presse, pour effectuer le travail, ceci grâce au dispositif selon la présente invention.

## Revendications

1. Dispositif combiné pour l'andainage et pour la mise en balles par pressage, notamment du foin, destiné à être relié à un engin tracteur muni d'un attelage trois points et d'une prise de force, **caractérisé en ce qu'**il comprend des moyens (10,110) d'attelage, un châssis (12,112) unique sur roues (54-1, 54-2; 154-1, 154-2) comprenant des moyens (14,114) d'andainage et des moyens (16,116) de réception et de support d'une presse (18,118) à balles.

2. Dispositif combiné pour l'andainage et pour la mise en balles par pressage selon la revendication 1, **caractérisé en ce que** les moyens d'attelage (10,110) comprennent une interface (20,120) mécanique trois points, destinée à coopérer avec l'attelage trois points de l'engin tracteur et une interface (22,122) moteur, destinée à coopérer avec la prise de force dudit engin tracteur.

3. Dispositif combiné pour l'andainage et pour la mise en balles par pressage selon la revendication 2, **caractérisé en ce que** l'interface (20) mécanique supporte des moyens (24) de pilotage des vitesses de rotation.

4. Dispositif combiné pour l'andainage et pour la mise en balles par pressage selon la revendication 2 ou 3, **caractérisé en ce que** l'interface (20,120) mécanique comprend une platine (28,128) d'attelage.

5. Dispositif combiné pour l'andainage et pour la mise en balles par pressage selon l'une quelconque des revendications précédentes, **caractérisé en ce que** le châssis (12,112) unique comprend un timon (30,130) équipé d'un anneau (32,132) destiné à coopérer avec les moyens (10,110) d'attelage, par son extrémité amont et se prolongeant pour former les moyens (16,116) de réception et de support destinés à accueillir la presse (18,118) à balles à l'autre extrémité.

6. Dispositif combiné pour l'andainage et pour la mise en balles par pressage selon la revendication 5, **caractérisé en ce que** le timon (30,130) supporte les moyens (14,114) d'andainage.

7. Dispositif combiné pour l'andainage et pour la mise en balles par pressage selon la revendication 6, **caractérisé en ce que** les moyens (14,114) d'andainage comportent deux bras (34-1, 34-2; 134-1, 134-2) mobiles par rapport au timon (30,130), disposés en amont des moyens (16,116) de réception et de support destinés à accueillir la presse (18,118) à balles, chaque bras portant des râteaux (38,138) montés à rotation ainsi qu'un train (40,140) de roues.

8. Dispositif combiné pour l'andainage et pour la mise en balles par pressage selon la revendication 6 ou 7, **caractérisé en ce qu'**il comprend une motorisation mécanique par arbre (42-1, 42-2; 142-1, 142-2) d'entraînement en rotation des râteaux (38,138).

9. Dispositif combiné pour l'andainage et pour la mise en balles par pressage selon l'une quelconque des revendications précédentes, **caractérisé en ce que** les moyens (16,116) de réception et de support de la presse (18,118) à balles comprennent deux longerons (52-1, 52-2; 152-1, 152-2) portant chacun une roue (54-1, 54-2; 154-1, 154-2) avec ses moyens de suspension et de roulement et constituant sensiblement un Y, leurs extrémités arrière étant reliées par un berceau (56,156), comprenant lui-même de part et d'autre d'un pont (58,158), deux nacelles (60-1, 60-2; 160-1, 160-2) destinées à recevoir les roues de la presse (18,118) à balles.

10. Dispositif combiné pour l'andainage et pour la mise en balles par pressage selon la revendication 9, **caractérisé en ce que** le berceau (56,156) est porté par des ascenseurs (62-1, 62-2, 162-1, 162-2) de façon à placer le berceau (56, 156) en au moins une première position basse P1 de mise en place de la presse (18, 118) à balles et une deuxième position relevée P2 de déplacement.

11. Dispositif combiné pour l'andainage et pour la mise en balles par pressage selon la revendication 10, **caractérisé en ce que** les moyens (16,116) de réception et de support de la presse (18,118) à balles comprennent des roues (64-1, 64-2; 164-1, 164-2) de jauge montées directionnelles autour d'un axe vertical (66-1, 66-2; 166-1, 166-2) et munies d'organes (68-1, 68-2;168-1, 168-2) de relevage.

12. Dispositif combiné pour l'andainage et pour la mise en balles par pressage selon la revendication 10 ou 11, **caractérisé en ce que** les moyens (16,116) de réception et de support de la presse (18,118) à balles comprennent en outre des moyens (70,170) de chargement et de retenue de ladite presse (18,118) à balles.

13. Dispositif combiné pour l'andainage et pour la mise en balles par pressage selon la revendication 12, **caractérisé en ce que** ces moyens (70) de chargement et de retenue de ladite presse (18) à balles comportent un mât (72) de chargement, monté à rotation et à translation sur un arceau (74) équipé d'un organe (76,176) de manoeuvre.

14. Dispositif combiné pour l'andainage et pour la mise en balles par pressage selon la revendication 12, **caractérisé en ce que** ces moyens (170) de chargement et de retenue de ladite presse (118) à balles comprennent un bras (84) télescopique, comprenant au moins un brin (84-1, 84-2), agencé dans le timon (130) et mu par un organe (176) de manoeuvre et des moyens (86) raidisseurs.

15. Dispositif combiné pour l'andainage et pour la mise en balles par pressage selon la revendication 12, **caractérisé en ce que** ces moyens (86) raidisseurs comprennent deux montants (88-1,88-2) disposés en Vé, une des extrémités de chacun des deux montants (88-1,88-2) étant solidarisée à l'extrémité du premier brin et l'autre extrémité de chacun des deux montants (88-1,88-2) étant munie de patins (90) coulissants, aptes à coopérer par coulissement avec une glissière (92-1,92-2), portée par le châssis (112) unique.
